# EUROPEAN PATENT SPECIFICATION

(11) **EP 3 387 956 B1**
(45) Date of publication and mention of the grant of the patent: **22.05.2019**
(21) Application number: 17166198.6
(22) Date of filing: 12.04.2017
(51) Int. Cl.: A47C 1/022, A47C 3/20

(54) **CHAIR INCLUDING SCREW-SHAFT BASED LEVER ACTUATOR MECHANISM**
STUHL MIT SCHRAUBENSCHAFTBASIERTEM HEBELBETÄTIGUNGSMECHANISMUS
CHAISE AVEC MÉCANISME D'ACTIONNEMENT DE LEVIER AYANT UN ARBRE À VIS

(43) Date of publication of application: 17.10.2018
(73) Proprietor: L&P Property Management Company, South Gate, CA 90280 (US)
(72) Inventor: Jones, Mark Grant, Preston, Lancashire PR7 5RF (GB)
(74) Representative: Banzer, Hans-Jörg

(56) References cited:
- EP-A1- 2 910 415
- US-A- 5 806 927
- US-A- 5 809 908

## Description

### FIELD OF THE INVENTION

The invention relates to a chair having an actuator mechanism for the chair.

### BACKGROUND OF THE INVENTION

For a wide variety of applications, chairs are nowadays provided with one or more functions that can be actuated by a person sitting on the chair. Such functions may for example include adjustment of a height of the chair, adjustment of a tilt angle of a seat part of the chair, adjustment of a tilt angle of a back part of the chair, or locking or releasing a tilt movement of the chair. By way of example, one or more of such functions may be provided in an office chair.

For controlling such functions, the chair needs to be provided with one or more actuating elements, such as levers or knobs. To enable comfortable usage of such actuating elements, these are preferably arranged at locations which are easily accessible to a person sitting on the chair, e.g., below the seat part of the chair. However, in some cases there may be only limited space available for incorporating an actuator mechanism which mechanically translates motion of the actuating elements into operation of the corresponding seat function. On the other hand, increasing the size of seat components or adding additional seat components to accommodate the actuator mechanism might not be desirable from a design or cost perspective.

Accordingly, there is a need for user-friendly actuator mechanisms for chair functions which can be efficiently integrated into chair structures.

US 5,809,908 A discloses an actuator mechanism for adjusting the height of a work surface, the actuator mechanism comprising a screw shaft having an external thread, a lever configured to rotate the screw shaft, and a shuttle engaged with the external thread of the screw shaft, whereby a rotation of the screw shaft caused by the lever translates into a linear motion of the shuttle along the screw shaft, and wherein the height of the work surface is adjusted by the linear motion of the shuttle.

### BRIEF SUMMARY OF THE INVENTION

The present invention provides a chair having an actuator mechanism according to claim 1. The dependent claims define further embodiments.

The actuator mechanism of the chair according to an embodiment has the purpose of being used in a chair, for controlling a function of the chair. Examples of such function are adjustment of a height of a chair seat, adjustment of a tilt angle of a chair seat of the chair, adjustment of a tilt angle of a back of the chair, shifting of a seat of the chair with respect to a back of the chair, or locking or releasing a tilt movement of the chair. The actuator mechanism comprises a screw shaft having an external thread. Further, the actuator mechanism comprises a lever configured to rotate the screw shaft and a shuttle engaged with the external thread of the screw shaft. By the engagement of the shuttle with the external thread of the screw shaft, rotation of the screw shaft caused by the lever translates into a linear motion of the shuttle along the screw shaft. The function of the chair is controlled by the linear motion of the shuttle. By using the screw shaft to convert the rotary motion caused by the lever into a linear motion, the actuator mechanism can be built with a compact configuration which is substantially confined to a plane including the direction of the linear motion of the shuttle. Further, also forces acting within the actuator mechanism can be confined to a plane including the direction of the linear motion of the shuttle, which facilitates building the actuator mechanism with sufficient mechanical strength. The actuator mechanism is integrated in the chair seat, using the space provided within the horizontal plane of the chair seat. In this case, the lever could be arranged at the edge of the chair seat, so that it can be easily reached and operated by a person sitting on the chair. The screw shaft could then be arranged in parallel to the edge of the chair seat, which means that the lever can be conveniently operated by an upward pulling action.

According to an embodiment, the actuator mechanism further comprises a spring arranged to be tensioned by the linear motion of the shuttle. By tension in the spring by the linear motion of the shuttle, a force required to operate the lever can be adjusted to a desired level.

According to an embodiment, the actuator mechanism further comprises a Bowden cable coupled to the shuttle and configured to control said function of the chair. By using the Bowden cable, the function of the chair can be efficiently controlled, even if a mechanism for implementing the function of the chair is located remotely from the actuator mechanism. However, in addition to or as an alternative to a Bowden cable, the actuator mechanism could also comprise a linkage mechanism configured to control the function of the chair. For example, a mechanism for implementing the function of the chair could be located in the vicinity of the actuator mechanism and this mechanism and the actuator mechanism could be coupled directly by the linkage mechanism.

According to an embodiment, the actuator mechanism comprises a further screw shaft having an external thread, a further lever configured to rotate the further screw shaft; and a further shuttle engaged with the external thread of the further screw shaft. In this case, rotation of the further screw shaft caused by the further lever translates into a linear motion of the further shuttle along the further screw shaft, and a further function of the chair can be controlled by the linear motion of the further shuttle. In this way, the actuator mechanism can be enhanced to support multiple functions of the chair. At the same time, a compact configuration of the actuator mechanism may be maintained because both screw shafts may be arranged in the same plane, e.g., parallel to each other. Both screw shafts could be arranged in parallel to an edge of the chair seat.

According to an embodiment, the external thread of the screw shaft has a first pitch and the external thread of the further screw shaft has a second pitch which is higher than the first pitch. In this way, different pitches on the screw shafts may be used to compensate for different ranges of linear motion required to control different functions of the chair. For example, control of the above-mentioned function of the chair may require a first range of said linear motion of the shuttle, while control of the above-mentioned further function of the chair requires a second range of the linear motion of the further shuttle, the second range being higher than the first range. This may be compensated for by making the second pitch higher than the first pitch. As a result, a range of motion of the lever which causes the first range of linear motion of the shuttle may be equal to a range of motion of the further lever which causes the second range of linear motion of the further shuttle. This is desirable from the perspective of user experience, because control of different functions of the chair can be achieved by levers having similar characteristics.

According to an embodiment, the actuator mechanism having the screw shaft and the further screw shaft further comprises a first spring arranged to be tensioned by said linear motion of the shuttle and a second spring arranged to be tensioned by said linear motion of the further shuttle. In this case, the first spring may have a higher spring constant than the second spring. In this way, a force required to operate the lever and a force required to operate the further lever can be adjusted with respect to each other.

Specifically, a force required for moving the lever to cause the first range of linear motion of the shuttle may be adjusted to be equal to a force required for moving the further lever to cause the second range of linear motion of the further shuttle. This is desirable from the perspective of user experience, because control of different functions of the chair can be achieved by levers having similar characteristics.

According to an embodiment, the actuator mechanism further comprises a support structure on which the screw shaft, the lever, and the shuttle are supported. The support structure may be different from an outer shell of the chair seat. For example, the support structure could be attached to the outer shell of the chair seat by screw attachment or gluing. By using the separate support structure, sufficient mechanical strength for supporting the elements of the actuator mechanism may be achieved without compromising the appearance of the outer shell of the chair seat. For example, if the outer shell of the chair seat is moulded from a plastic material, it can be avoided that the support structures are molded as part of the outer shell, which may adversely affect the appearance of the outer shell, because typically even structures which are arranged on the interior side of the outer shell will be visible due to "sinking" of the plastic material in the molding process.

According to a further embodiment, a chair is provided, e.g., an office chair. The chair has one or more functions, e.g., adjustment of a height of the chair, adjustment of a tilt angle of a seat of the chair, adjustment of a tilt angle of a back of the chair, shifting of a seat of the chair with respect to a back of the chair, or locking or releasing a tilt movement of the chair. The chair comprises a chair seat and at least one actuator mechanism as described above. The at least one actuator mechanism is integrated the chair seat. The at least one actuator mechanism is used for controlling the function(s) of the chair. For controlling multiple functions of the chair, the chair may comprise multiple actuator mechanisms as described above, and/or one or more actuator mechanisms having multiple levers as described above.

### BRIEF DESCRIPTION OF DRAWINGS

Embodiments of the invention will be described with reference to the accompanying drawings.
Fig. 1 illustrates a chair with an actuator mechanism according to an embodiment of the invention.
Fig. 2 schematically illustrates components and operation of the actuator mechanism.
Fig. 3 illustrates an actuator mechanism of the chair according to an embodiment of the invention.
Figs. 4A and 4B illustrate operation of the actuator mechanism of Fig. 3.
Fig. 5 illustrates an actuator mechanism of the chair according to a further embodiment of the invention.
Fig. 6 illustrates an actuator mechanism of the chair according to a further embodiment of the invention

### DETAILED DESCRIPTION OF EMBODIMENTS

Exemplary embodiments of the invention will be described with reference to the drawings. While some embodiments will be described in the context of specific fields of application, such as in the context of an office-type chair, the embodiments are not limited to this field of application. The features of the various embodiments may be combined with each other unless specifically stated otherwise.

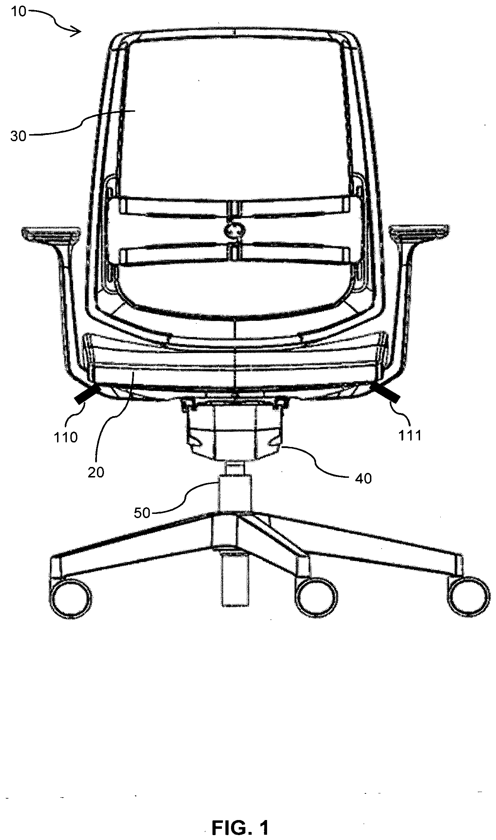

Fig. 1 shows a chair 10 according to an embodiment. The chair 10 is illustrated to be an office-type chair and has a chair seat 20, a chair back 30 and components to interconnect the chair seat 20 with the chair back 30. As further illustrated, the chair 10 also includes a base assembly with a pedestal column 50, support legs extending radially from the pedestal column 50, and castors arranged on the outer ends of the support legs. As further illustrated, a mechanism 40 is arranged on the pedestal column 50. The mechanism implements a number of functions of the chair 10, e.g., adjustment of a height of the chair 10, adjustment of a tilt angle of the chair seat 20 with respect to the pedestal column and/or with respect to the chair back 30, adjustment of a tilt angle of the chair back 30 with respect to the pedestal column 50 and/or with respect to the chair seat 20 of, shifting of the chair seat 20 with respect to the chair back 30, or locking or releasing a tilt movement of the chair 10. This tilt movement may for example involve concurrent tilting of the chair seat 20 and the chair back 30 in response to rocking movements of a person sitting on the chair 10. The adjustment of the height of the chair seat 20 may involve telescoping of the pedestal column, and this telescoping may be controlled by a gas cylinder which is pressurized when lowering the chair seat 20 and depressurized when lifting the chair seat 20.

For controlling the functions of the chair 10, the chair is provided with actuating levers 110, 111 which are arranged at an outer edge of the chair seat 20. Accordingly, the actuating levers 110, 111 can be easily reached by a person sitting on the chair 10. By pulling the actuating lever 110, 111 upward, the corresponding function of the chair 10 can be activated. By way of example, in response to pulling the actuating lever 110 upward, the mechanism 40 may release a lock of the telescoping movement of the pedestal column 50, thereby enabling the person sitting on the chair 10 to adjust the heat of the chair seat 20. When releasing the actuating lever 110, it returns to its original position and the mechanism 40 locks the telescoping movement of the pedestal collagen 50 in the currently set position. In a similar manner, pulling the actuating lever 111 upward, the mechanism 40 could release a lock of the tilt movement of the chair 10.

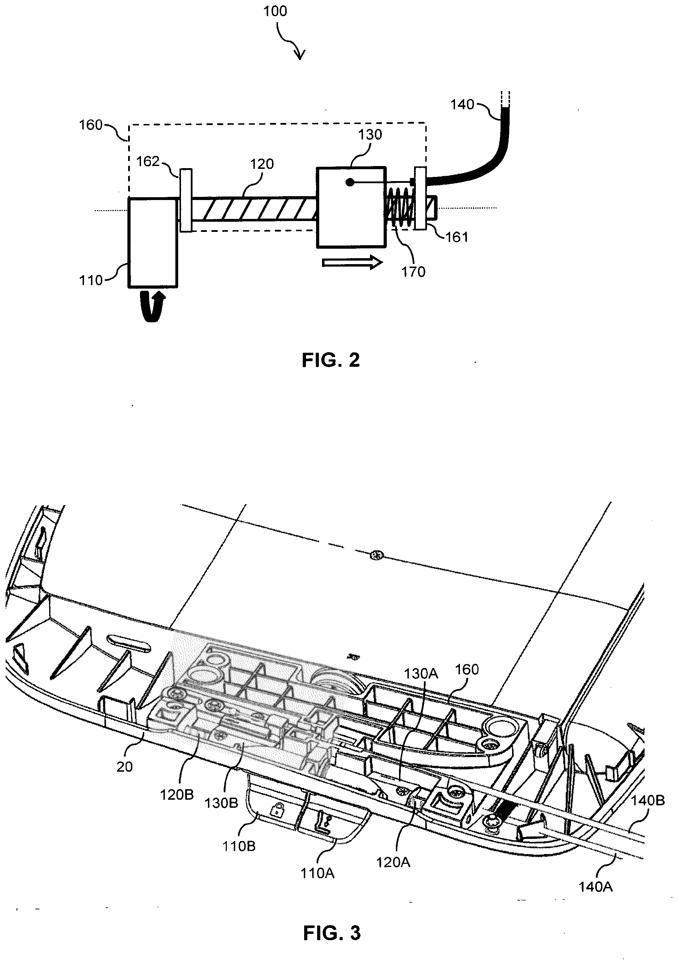

The actuating lever 110 and the actuating lever 111 are each part of a corresponding actuating mechanism which is integrated in the chair seat 20. With reference to the actuating lever 110, structures and operation of such actuating mechanism 100 are schematically illustrated in Fig. 2. However, it is noted that a similar actuating mechanism could also be used for the actuating lever 111 or any other actuating lever of the chair 10.

As illustrated in Fig. 2, the actuating mechanism 100 includes a screw shaft 120. The lever 110 is connected to the screw shaft 120 so that the screw shaft 120 is rotated about a longitudinal rotation axis (illustrated by a dotted line) when the lever 110 is operated, as illustrated by a solid arrow. The screw shaft 120 has a helix-shaped external thread. A shuttle 130, which is supported to be movable in a direction along the screw shaft 120, is engaged with the external thread of the screw shaft 120. For example, the shuttle 130 could be provided with an internal thread which matches the external thread of the screw shaft 120. However, it is also possible to utilize other features of the shuttle 130 to achieve engagement with the external thread of the screw shaft 120, e.g., one or more fixed protrusions of the shuttle 130, or balls or rollers which are rotatably supported on the shuttle 130. Accordingly, a rotation of the screw shaft 120, caused by operation of the lever 110, translates into a linear motion of the shuttle 130 along the screw shaft 120, as illustrated by an open arrow. In typical implementations, the range of rotation of the screw shaft 120 caused by operation of the lever 110 is between 30° and 180°. The corresponding linear displacement of the shuttle 130 may be in the range of 10 - 20 mm. The linear motion of the shuttle 130 is used for mechanically controlling a function of the chair.

As further illustrated, the actuator mechanism 100 includes a Bowden cable 140. The Bowden cable 140 has the purpose of transmitting the falls associated with the linear motion of the shuttle 130 to the remotely located mechanism 40, which implements the function of the chair 10 to be controlled by the lever 110. The Bowden cable 140 may for example extend through the chair seat 20 and through the pedestal column 50, so that it is not visible from the outside.

As illustrated, a wire of the Bowden cable 140 is coupled to the shuttle 130, while an outer sheath of the Bowden cable 140 is anchored on a support structure 160 of the actuator mechanism 100. In the illustrated example, the support structure 160 includes a first support element 161, which is used for anchoring the outer sheath of the Bowden cable 140. Further, the first support element 161 and a second support element 162 of the support structure 160 are used for rotatably supporting the screw shaft 120. Additional support structures may be provided as well, e.g., one or more support structures for guiding the linear motion of the shuttle 130. In the example of Fig. 2, the linear motion of the shuttle 130 releases tension in the Bowden cable 140. However, it is noted that in other implementation the linear motion of the shuttle 130 could also have the effect of increasing tension in the Bowden cable 140.

As further illustrated, a spring 170 is arranged between the shuttle 130 and the support structure 161. In the illustrated example, the spring 170 is assumed to be a helical compression spring. Accordingly, when the shuttle 130 moves in the illustrated manner toward the support structure 161, the spring 170 is tensioned. The tensioning of the spring 170 provides a resistance against the operation of the lever 110. Further, by selecting the spring 170 with a suitable spring constant, the force required for operating the lever 110 can be adjusted to a desired level, which is different from the force which would be needed for controlling the function of the chair 10. In this way, it can achieved that the lever 110 has a desirable crisp feel of operation. Further, the spring 170 may also provide for restoration of the shuttle 130 and the lever 110, when the lever 110 is released. It is noted that providing the spring 170 in the form of a helical compression spring is merely exemplary, and that other kinds of springs could be used as an alternative or in addition, e.g., other forms of compression springs, such as a gas spring, or an extension spring provided between the support structure 162 and the shuttle 130.

Fig. 3 shows an example of an actuator mechanism which is based on the principles as explained in connection with Fig. 2. In the example of Fig. 3, the actuator mechanism includes a first lever 110A and a second lever 110B. Further, the actuator mechanism includes a first screw shaft 120A and a second screw shaft 120B, each provided with a helix like external thread. A first shuttle 130A is engaged with the first screw shaft 120A, so that a rotation of the first screw shaft 120A causes a linear motion of the first shuttle 130A. Similarly, a second shuttle 130B is engaged with the second screw shaft 120B, so that a rotation of the second screw shaft 120B causes a linear motion of the second shuttle 130B.

As explained in connection with Fig. 2, the actuator mechanism of Fig. 3 includes a first spring which is tensioned by the linear motion of the first shuttle 130A, and a second spring which is tensioned by the linear motion of the second shuttle 130B. A first Bowden cable 140A is coupled to the first shuttle 130A, and a second Bowden cable 140B is coupled to the second shuttle 130B. The elements of the actuator mechanism are supported by a support structure 160, which is attached by screw fixation into the interior of an outer shell of the chair seat 20. The outer shell of the chair seat 20 and the support structure 160 are both formed of a molded plastic material. However, since the outer shell of the chair seat 20 and the support structure 160 are molded as separate parts, the presence of the support structure 160 does not adversely affect the appearance of the outer shell of the chair seat 20, e.g., due to sinking of the outer surface.

In the example of Fig. 3, the linear motion of the first shuttle 130A is used for mechanically controlling a first function of the chair 10, and the linear motion of the second shuttle 130B is used for mechanically controlling a second function of the chair 10. By way of example, the linear motion of the first shuttle 130A could be used for adjustment of the height of the chair seat 20, whereas the linear motion of the second shuttle 130B could be used for locking or releasing a tilt movement of the chair 10. As can be seen, with respect to each of the first lever 110A and the second lever 110B, the actuator mechanism of Fig. 3 is configured for operation as explained in connection with Fig. 2. In the example of Fig. 3, the first screw shaft 120A and the second screw shaft 120B are co-linear and arranged in parallel to the outer edge of the chair seat 20. In this way, the multiple levers 110A, 110B and associated components of the actuating mechanism can be accommodated in a space efficient manner.

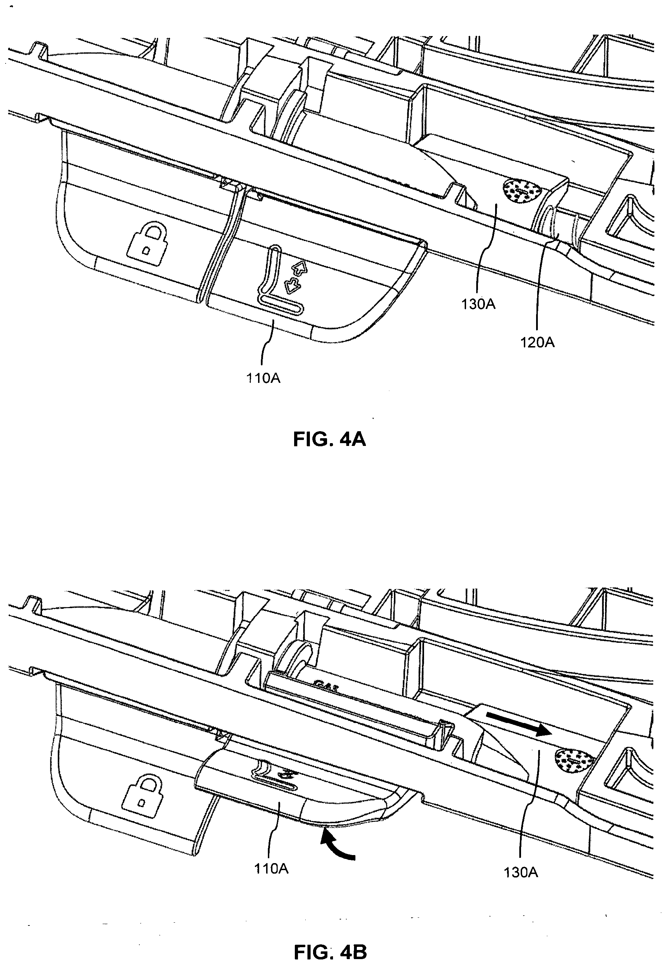

Fig. 4A and 4B illustrate operation of the actuator mechanism of Fig. 3. Specifically, Fig. 4A shows the actuator mechanism in an unactuated state, with both levers 110A, 110B in a rest position. Fig. 4B shows the actuator mechanism in an actuated state of the first lever 110A, while the second lever 110B is in its rest position. As can be seen, by pulling the lever 110A upward from its rest position, the first screw shaft 120A is rotated, thereby causing a linear motion of the first shuttle 130A and controlling the corresponding function of the chair 10. In a similar manner, the second lever 110B could be pulled upward, thereby causing a linear motion of the second shuttle 130B and controlling the corresponding function of the chair 10.

The range of motion of the first shuttle 130A which is required for control of the corresponding function of the chair 10 may be different from the range of motion of the second shuttle 130B which is required for control of the corresponding function of the chair 10. In view of user experience it is however desirable that the range of motion of the levers 110A, 110B as required for controlling the different functions is substantially the same. In the illustrated actuator mechanism, this may be achieved by selecting the pitches of the pitches of the screw shafts 120A, 120B in such a way that the required range of linear motion of the first shuttle 130A and the required range of linear motion of the second shuttle 130B are obtained by the same range of motion of both levers 110A, 110B. Accordingly, if for the first shuttle 130A higher range of linear motion is required than for the second shuttle 130B, the first screw shaft 120A may be provided with a higher pitch than the second screw shaft 120B. Similarly, if for the first shuttle 130A lower range of linear motion is required than for the second shuttle 130B, the first screw shaft 120A may be provided with a lower pitch than the second screw shaft 120B.

Further, the functions controlled by the first lever 110A and the second lever 110B may require different forces exerted by the corresponding shuttle 130A, 130B. Further, also using different pitches on the first screw shaft 120A and on the second screw shaft 120B may result in different forces being required to move the shuttle 130A, 130B by rotation of the lever 110A, 110B. In view of user experience it is however desirable that the force which is required for operation of the levers 110A, 110B is substantially the same. In the illustrated actuator mechanism, this may be achieved by selecting the springs which are tensioned by the linear motion of the shuttles 130A, 130B in such a way that the force which is required for operation of the levers 110A, 110B is substantially the same. Accordingly, if for the first shuttle 130A a higher force is required to generate the linear motion than for the second shuttle 130B, the first spring, which is tensioned by the linear motion of the first shuttle 130A, may be selected with a lower spring constant than the second spring, which is tensioned by the linear motion of the second shuttle 130B. Similarly, if for the first shuttle 130A a lower force is required to generate the linear motion than for the second shuttle 130B, the first spring may be selected with a higher spring constant than the second spring.

As can be seen, even if multiple functions controlled by the actuator mechanism have different mechanical characteristics, this can be compensated for by appropriate selection of the pitches of the external thread of the screw shafts 120A, 120B and/or appropriate selection of the first and second springs.

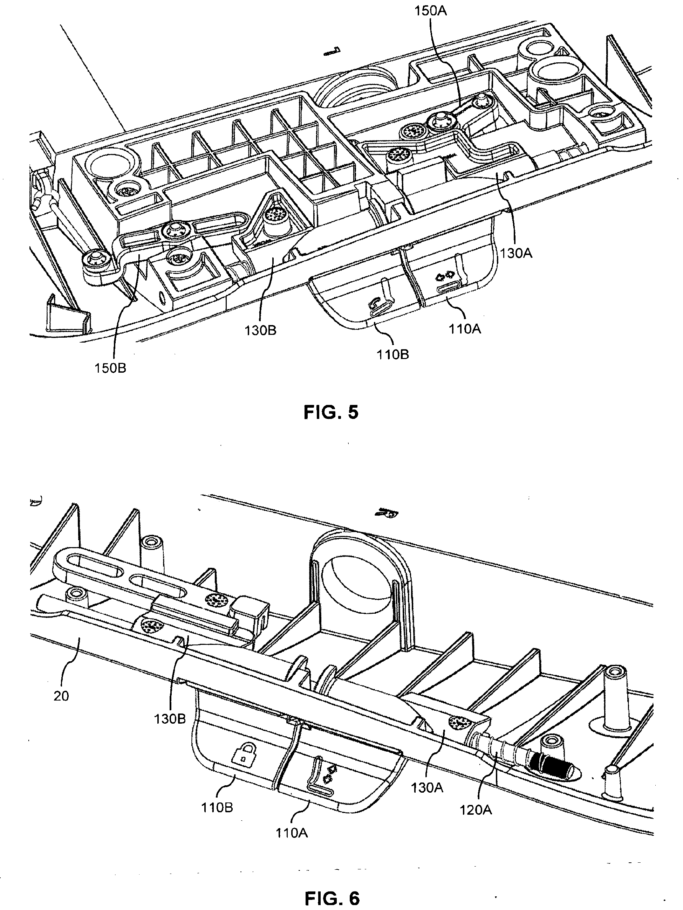

In the above examples, it was assumed that the linear motion of the shuttle 130, 130A, 130B is transmitted via the corresponding Bowden cable 140, 140A, 140B to the remote mechanism 40 which implements the function of the chair 10. However, in some implementations, other mechanisms could be used for controlling a function of the chair 10 by the linear motion of the shuttle130, 130A, 130B. By way of example, one or more of the illustrated Bowden cables 140, 140A, 140B could be replaced by a linkage mechanism which is coupled to a mechanism located in the vicinity of the actuator mechanism. A corresponding example of an actuator mechanism is illustrated in Fig. 5.

As can be seen, the actuator mechanism of Fig. 5 is similar to that of Fig. 3 and includes the first lever 110A, the second lever 110B, the first screw shaft 120A, the second screw shaft 120B, the first shuttle 130A, and the second shuttle 130B. However, rather than including the first Bowden cable 140 a and the second Bowden cable 140 B, the actuator mechanism of Fig. 5 includes a first linkage mechanism 150A coupled to the first shuttle 130A, and a second linkage mechanism 150B coupled to the second shuttle 130B. In the illustrated example, the first linkage mechanism 150A is based on an internal lever which is in sliding engagement with a sloped face of the first shuttle 130A. Similarly, the second linkage mechanism 150B is based on an internal lever which is in sliding engagement with a sloped face of the second shuttle 130B. The first linkage mechanism 150A may for example be used for operating a mechanism which controls a function for shifting of the chair seat 20 with respect to the chair back 30. The second linkage mechanism 150B may for example be used for operating a mechanism which controls tilting of the chair seat 20 with respect to the chair back 30. These mechanisms may be implemented within the chair seat 20, in the vicinity of the actuator mechanism, so that direct coupling of the mechanism to the corresponding linkage mechanism is possible.

Further, while in the above examples it was assumed that elements of the actuator mechanism are supported on the support structure 160 which is different from the outer shell of the chair seat 20, it may in some implementations also be possible to support at least some of the elements of the actuator mechanism directly on the outer shell of the chair seat 20, thereby simplifying construction of the chair 10. A corresponding example of an actuator mechanism is illustrated in Fig. 6.

As can be seen, the actuator mechanism of Fig. 6 is similar to that of Fig. 3 and includes the first lever 110A, the second lever 110B, the first screw shaft 120A, the second screw shaft 120B, the first shuttle 130A, and the second shuttle 130B. For a better overview, the first Bowden cable 140A and the second Bowden cable 140B are not illustrated. However, rather than including the support structure 160 as a separate component, the levers 110A, 110B, the screw shafts 120A, 120B, and the shuttles 130A, 130B are supported directly on molded parts of the outer shell of the chair seat 20.

While exemplary embodiments have been described in the context of office-type chairs, the actuator mechanisms and chairs according to embodiments of the invention are not limited to this particular application. Rather, actuator mechanisms as explained above may be employed in a wide variety of chairs. Further, it is noted that the illustrated actuator mechanisms may be modified in various ways. By way of example, the actuator mechanism could also include more than two levers and corresponding screw shafts and shuttles, thereby enabling support of more than two functions of the chair by the same actuator mechanism. Still further, a shuttle coupled to a Bowden cable and a shuttle coupled to a linkage mechanism could be combined in the same actuator mechanism.

## Claims

1. A chair (10), comprising:
a chair seat (20); and
an actuator mechanism (100) for the chair (10), the actuator mechanism (100) being arranged in the chair seat (20) and comprising:
a screw shaft (120; 120A, 120B) having an external thread;
a lever (110; 110A, 110B) configured to rotate the screw shaft (120; 120A, 120B); and
a shuttle (130; 130A, 130B) engaged with the external thread of the screw shaft (120; 120A, 120B),
whereby a rotation of the screw shaft (120; 120A, 120B) caused by the lever (110; 110A, 110B)translates into a linear motion of the shuttle (130; 130A, 130B) along the screw shaft (120; 120A, 120B), and
wherein a function of the chair (10) is controlled by said linear motion of the shuttle (130; 130A, 130B).

2. The chair (10) according to claim 1, the actuator mechanism (100) comprising:
a spring (170) arranged to be tensioned by said linear motion of the shuttle (130; 130A, 130B).

3. The chair (10) according to claim 1 or 2, the actuator mechanism (100) comprising:
a Bowden cable (140; 140A, 140B) coupled to the shuttle (130; 130A; 130B) and configured to control said function of the chair (10).

4. The chair (10) according to any one of the preceding claims, the actuator mechanism (100) comprising:
a linkage mechanism (150A, 150B) configured to control said function of the chair.

5. The chair (10) according to any one of the preceding claims, the actuator mechanism (100) comprising:
a further screw shaft (120; 120A, 120B) having an external thread;
a further lever (110; 110A, 110B) configured to rotate the further screw shaft (120; 120A, 120B); and
a further shuttle (130; 130A, 130B) engaged with the external thread of the further screw shaft (120; 120A, 120B),
whereby rotation of the further screw shaft (120; 120A, 120B) caused by the further lever (110; 110A, 110B) translates into a linear motion of the further shuttle (130; 130A, 130B) along the further screw shaft (120; 120A, 120B), and
wherein a further function of the chair (10) is controlled by said linear motion of the further shuttle (130; 130A, 130B).

6. The chair (10) according to claim 5,
wherein the external thread of the screw shaft (120; 120A, 120B) has a first pitch and the external thread of the further screw shaft (120; 120A, 120B) has a second pitch which is higher than the first pitch.

7. The chair (10) according to claim 6,
wherein control of said function of the chair (10) requires a first range of said linear motion of the shuttle (130; 130A, 130B), and
wherein control of said further function of the chair (10) requires a second range of said linear motion of the further shuttle (130; 130A, 130B), the second range being higher than the first range.

8. The chair (10) according to claim 7,
wherein a range of motion of the lever (110; 110A, 110B)which causes said first range of linear motion of the shuttle (130; 130A, 130B) is equal to a range of motion of the further lever (110; 110A, 110B) which causes said second range of linear motion of the further shuttle (130; 130A, 130B).

9. The chair (10) according to any one of claims 5 to 8, the actuator mechanism (100) comprising:
a first spring (170) arranged to be tensioned by said linear motion of the shuttle (130; 130A, 130B); and
a second spring (170) arranged to be tensioned by said linear motion of the further shuttle (130; 130A, 130B),
wherein the first spring has a different spring constant than the second spring.

10. The chair (10) according to claim 9,
wherein a force required for moving the lever (110; 110A, 110B) to cause said first range of linear motion of the shuttle (130; 130A, 130B) is equal to a force required for moving the further lever (110; 110A, 110B) to cause said second range of linear motion of the further shuttle (130; 130A, 130B).

11. The chair (10) according to any one of the preceding claims, the actuator mechanism (100) comprising:
a support structure (160) on which the screw shaft, the lever, and the shuttle are supported, the support structure (160) being different from an outer shell of the chair seat (20).

12. The chair (10) according to any one of the preceding claims,
wherein the actuator mechanism (100) is arranged at an edge of the chair seat (20).

13. The chair (10) according to claim 12,
wherein a rotation axis of the screw shaft is arranged in parallel to the edge of the chair seat (20).

## Patentansprüche

1. Stuhl (10), umfassend:
einen Stuhlsitz (20); und
einen Aktuatormechanismus (100) für den Stuhl (10), wobei der Aktuatormechanismus (100) in dem Stuhlsitz (20) angeordnet ist und umfasst:
eine Gewindestange (120; 120A, 120B) mit einem Außengewinde;
einen Hebel (110; 110A, 110B), welcher dazu ausgestaltet ist, die Gewindestange (120; 120A, 120B) zu drehen; und
eine Pendelvorrichtung (130; 130A, 130B), welche mit dem Außengewinde der Gewindestange (120; 120A, 120B) im Eingriff ist,
wobei eine durch den Hebel (110; 110A, 110B) verursachte Drehung der Gewindestange (120; 120A, 120B) sich in eine Linearbewegung der Pendelvorrichtung (130; 130A, 130B) entlang der Gewindestange (120; 120A, 120B) überträgt, und
wobei eine Funktion des Stuhls (10) durch die Linearbewegung der Pendelvorrichtung (130; 130A, 130B) gesteuert ist.

2. Stuhl (10) nach Anspruch 1, wobei der Aktuatormechanismus (100) umfasst:
eine Feder (170), welche dazu angeordnet ist, durch die Linearbewegung der Pendelvorrichtung (130; 130A, 130B) gespannt zu werden.

3. Stuhl (10) nach Anspruch 1 oder 2, wobei der Aktuatormechanismus (100) umfasst:
einen Bowden-Zug (140; 140A, 140B), welcher mit der Pendelvorrichtung (130; 130A; 130B) gekoppelt ist und dazu ausgestaltet ist, die Funktion des Stuhls (10) zu steuern.

4. Stuhl (10) nach einem der vorhergehenden Ansprüche, wobei der Aktuatormechanismus (100) umfasst:
einen Gestängemechanismus (150A, 150B), welcher dazu ausgestaltet ist, die Funktion des Stuhls zu steuern.

5. Stuhl (10) nach einem der vorhergehenden Ansprüche, wobei der Aktuatormechanismus (100) umfasst:
eine weitere Gewindestange (120; 120A, 120B) mit einem Außengewinde;
einen weiteren Hebel (110; 110A, 110B), welcher dazu ausgestaltet ist, die weitere Gewindestange (120; 120A, 120B) zu drehen; und
eine weitere Pendelvorrichtung (130; 130A, 130B), welche mit dem Außengewinde der weiteren Gewindestange (120; 120A, 120B) im Eingriff ist,
wobei eine durch den weiteren Hebel (110; 110A, 110B) verursachte Drehung der weiteren Gewindestange (120; 120A, 120B) sich in eine Linearbewegung der weiteren Pendelvorrichtung (130; 130A, 130B) entlang der weiteren Gewindestange (120; 120A, 120B) überträgt, und
wobei eine weitere Funktion des Stuhls (10) durch die Linearbewegung der weiteren Pendelvorrichtung (130; 130A, 130B) gesteuert ist.

6. Stuhl (10) nach Anspruch 5,
wobei das Außengewinde der Gewindestange (120; 120A, 120B) eine erste Gewindesteigung aufweist und das Außengewinde der weiteren Gewindestange (120; 120A, 120B) eine zweite Gewindesteigung, welche höher ist als die erste Gewindesteigung, aufweist.

7. Stuhl (10) nach Anspruch 6,
wobei eine Steuerung der Funktion des Stuhls (10) einen ersten Bereich der Linearbewegung der Pendelvorrichtung (130; 130A, 130B) erfordert, und
wobei eine Steuerung der weiteren Funktion des Stuhls (10) einen zweiten Bereich der Linearbewegung der weiteren Pendelvorrichtung (130; 130A, 130B) erfordert, wobei der zweite Bereich größer ist als der erste Bereich.

8. Stuhl (10) nach Anspruch 7,
wobei ein Bewegungsbereich des Hebels (110; 110A, 110B), welcher den ersten Bereich der Linearbewegung der Pendelvorrichtung (130; 130A, 130B) verursacht, gleich ist zu einem Bewegungsbereich des weiteren Hebels (110; 110A, 110B), welcher den zweiten Bereich der Linearbewegung der weiteren Pendelvorrichtung (130; 130A, 130B) verursacht.

9. Stuhl (10) nach einem der Ansprüche 5 bis 8, wobei der Aktuatormechanismus (100) umfasst:
eine erste Feder (170), welche dazu angeordnet ist, durch die Linearbewegung der Pendelvorrichtung (130; 130A, 130B) gespannt zu werden; und
eine zweite Feder (170), welche dazu angeordnet ist, durch die Linearbewegung der weiteren Pendelvorrichtung (130; 130A, 130B) gespannt zu werden,
wobei die erste Feder eine andere Federkonstante als die zweite Feder aufweist.

10. Stuhl (10) nach Anspruch 9,
wobei eine Kraft, welche zum Bewegen des Hebels (110; 110A, 110B) erforderlich ist, um den ersten Bereich der Linearbewegung der Pendelvorrichtung (130; 130A, 130B) zu bewirken, gleich ist zu einer Kraft, welche zum Bewegen des weiteren Hebels (110; 110A, 110B) erforderlich ist, um den zweiten Bereich der Linearbewegung der weiteren Pendelvorrichtung (130; 130A, 130B) zu bewirken.

11. Stuhl (10) nach einem der vorhergehenden Ansprüche, wobei der Aktuatormechanismus (100) umfasst:
eine Haltestruktur (160), an welcher die Gewindestange, der Hebel und die Pendelvorrichtung gelagert sind, wobei die Haltestruktur (160) von einer Außenschale des Stuhlsitzes (20) verschieden ist.

12. Stuhl (10) nach einem der vorhergehenden Ansprüche,
wobei der Aktuatormechanismus (100) an einem Rand des Stuhlsitzes (20) angeordnet ist.

13. Stuhl (10) nach Anspruch 12,
wobei eine Drehachse der Gewindestange parallel zu dem Rand des Stuhlsitzes (20) angeordnet ist.

## Revendications

1. Chaise (10), comprenant :
un siège de chaise (20) ; et
un mécanisme d'actionnement (100) pour la chaise (10), le mécanisme d'actionnement (100) étant agencé dans le siège de chaise (20) et comprenant :
un arbre à vis (120 ; 120A, 120B) ayant un filetage externe ;
un levier (110; 110A, 110B) configuré pour faire tourner l'arbre à vis (120 ; 120A, 120B) ; et
une navette (130 ; 130A, 130B) en prise avec le filetage externe de l'arbre à vis (120 ; 120A, 120B),
selon laquelle une rotation de l'arbre à vis (120; 120A, 120B) provoquée par le levier (110 ; 110A, 110B) se traduit par un mouvement linéaire de la navette (130 ; 130A, 130B) le long de l'arbre à vis (120 ; 120A, 120B), et
dans laquelle une fonction de la chaise (10) est commandée par ledit mouvement linéaire de la navette (130 ; 130A, 130B).

2. Chaise (10) selon la revendication 1, le mécanisme d'actionnement (100) comprenant :
un ressort (170) agencé pour être tendu par ledit mouvement linéaire de la navette (130 ; 130A, 130B).

3. Chaise (10) selon la revendication 1 ou 2, le mécanisme d'actionnement (100) comprenant :
un câble Bowden (140; 140A, 140B) couplé à la navette (130; 130A, 130B) et configuré pour commander ladite fonction de la chaise (10).

4. Chaise (10) selon l'une quelconque des revendications précédentes, le mécanisme d'actionnement (100) comprenant :
un mécanisme de liaison (150A, 150B) configuré pour commander ladite fonction de la chaise.

5. Chaise (10) selon l'une quelconque des revendications précédentes, le mécanisme d'actionnement (100) comprenant :
un autre arbre à vis (120 ; 120A, 120B) ayant un filetage externe ;
un autre levier (110 ; 110A, 110B) configuré pour faire tourner l'autre arbre à vis (120 ; 120A, 120B) ; et
une autre navette (130; 130A, 130B) en prise avec le filetage externe de l'autre arbre à vis (120 ; 120A, 120B),
selon laquelle une rotation de l'autre arbre à vis (120 ; 120A, 120B) provoquée par l'autre levier (110; 110A, 110B) se traduit par un mouvement linéaire de l'autre navette (130 ; 130A, 130B) le long de l'autre arbre à vis (120 ; 120A, 120B), et
dans laquelle une autre fonction de la chaise (10) est commandée par ledit mouvement linéaire de l'autre navette (130 ; 130A, 130B).

6. Chaise (10) selon la revendication 5,
dans laquelle le filetage externe de l'arbre à vis (120 ; 120A, 120B) a un premier pas et le filetage externe de l'autre arbre à vis (120 ; 120A, 120B) a un deuxième pas qui est plus grand que le premier pas.

7. Chaise (10) selon la revendication 6,
dans laquelle la commande de ladite fonction de la chaise (10) nécessite une première plage dudit mouvement linaire de la navette (130 ; 130A, 130B), et
dans laquelle la commande de ladite autre fonction de la chaise (10) nécessaire une deuxième plage dudit mouvement linéaire de l'autre navette (130 ; 130A, 130B), la deuxième plage étant plus grande que la première plage.

8. Chaise (10) selon la revendication 7,
dans laquelle une plage de mouvement du levier (110 ; 110A, 110B) qui provoque ladite première plage de mouvement linéaire de la navette (130 ; 130A, 130B) est égale à une plage de mouvement de l'autre levier (110 ; 110A, 110B) qui provoque ladite deuxième plage de mouvement linéaire de l'autre navette (130 ; 130A, 130B).

9. Chaise (10) selon l'une quelconque des revendications 5 à 8, le mécanisme d'actionnement (100) comprenant :
un premier ressort (170) agencé pour être tendu par ledit mouvement linéaire de la navette (130 ; 130A, 130B) ; et
un deuxième ressort (170) agencé pour être tendu par ledit mouvement linéaire de l'autre navette (130 ; 130A, 130B),
dans laquelle le premier ressort a une constante de ressort différente de celle du deuxième ressort.

10. Chaise (10) selon la revendication 9,
dans laquelle une force nécessaire pour déplacer le levier (110 ; 110A, 110B) pour provoquer ladite première plage de mouvement linéaire de la navette (130 ; 130A, 130B) est égale à une force nécessaire pour déplacer l'autre levier (110; 110A, 110B) pour provoquer ladite deuxième plage de mouvement linéaire de l'autre navette (130 ; 130A, 130B).

11. Chaise (10) selon l'une quelconque des revendications précédentes, le mécanisme d'actionnement (100) comprenant :
une structure de support (160) sur laquelle sont supportés l'arbre à vis, le levier et la navette, la structure de support (160) étant différente d'une enveloppe extérieure du siège de chaise (20).

12. Chaise (10) selon l'une quelconque des revendications précédentes,
dans laquelle le mécanisme d'actionnement (100) est agencé au niveau d'un bord du siège de chaise (20).

13. Chaise (10) selon la revendication 12,
dans laquelle un axe de rotation de l'arbre à vis est agencé parallèlement au bord du siège de chaise (20).
